# EUROPÄISCHE PATENTSCHRIFT

(11) **EP 0 370 217 B1**
(45) Veröffentlichungstag und Bekanntmachung des Hinweises auf die Patenterteilung: **10.02.1993**
(21) Anmeldenummer: 89118585.2
(22) Anmeldetag: 06.10.1989
(51) Int. Cl.: B60G 3/20, B60G 15/06

(54) **Aufhängung eines lenkbaren Fahrzeugrades**
Suspension for a steerable vehicle wheel
Suspension pour roue directrice de véhicule

(30) Priorität: 23.11.1988 DE 3839463
(43) Veröffentlichungstag der Anmeldung: 30.05.1990
(73) Patentinhaber: Bayerische Motoren Werke Aktiengesellschaft, 80788 München (DE)
(72) Erfinder: Sautter, Wolfgang, D-8032 Gräfelfing (DE); Strasser, Ludwig, D-8017 Ebersberg (DE); Mayer, Klaus, D-8050 Freising (DE)

(56) Entgegenhaltungen:
- EP-A- 0 279 135
- DE-A- 2 945 802
- US-B- 4 632 423

## Beschreibung

Die Erfindung betrifft eine Aufhängung eines lenkbaren Fahrzeugrades, insbesondere eines Vorderrades eines Personenkraftwagens gemäß dem Oberbegriff des Anspruchs 1.

Aus der EP-A-0279 136 ist bereits eine Aufhängung eines lenkbaren Fahrzeugrades, insbesondere eines Vorderrades eines Personenkraftwagens, bekannt, bei dem ein das Rad lagernder Radträger zur Führung des Rades zum einen über einen Dreieckslenker und zum anderen durch ein Federbein mit dem Fahrzeugaufbau oder dergleichen verbunden ist. Dabei ist ein am Radträger ausgebildeter Gelenkarm an einem am Federbein befestigten Gelenkarm angelenkt. Das Federbein ist am Fahrzeugaufbau gegen Verdrehung abgestützt. Durch die drehbare Verbindung des Radträgers mit dem Federbein ergibt sich eine steil verlaufende Lenkachse, so daß sich der Störkrafthebelarm verringert. Zur Erzielung eines kleinen oder negativen Lenkrollradius muß sich jedoch das Ende des Dreieckslenkers in der Nähe der Radmittenebene und damit relativ weit in der Radschüssel befinden. Aus diesem Grund ist der in der Radschüssel zu Verfügung stehende Raum beengt, so daß die Anordnung von großen Bremsscheiben und Zusatzeinrichtungen in der Regel nicht möglich ist.

Aus der DE-A-26 14 285 ist bereits eine unabhängige Aufhängung eines gelenkten Rades eines Kraftfahrzeuges bekannt, bei der der Radträger über zwei in seinem unteren Bereich hintereinanderliegende Lenker sowie durch ein mit dem Radträger starr verbundenes Federbein über ein oberes Gelenk drehbar mit dem Fahrzeugaufbau verbunden ist. Mit einer solchen Aufhängung läßt sich die ideelle Lenkachse weit in die Radschüssel hineinverlegen, ohne daß jedoch dort der Einbau beispielsweise einer ausreichend dimensionierten Bremse behindert wird. Die Verlegung der ideellen Lenkachse in die Radschüssel ermöglicht die Erzielung eines kleinen oder negativen Lenkrollradius mit den sich daraus ergebenden bekannten Vorteilen. Diese Doppelgelenk-Federbeinkonstruktion befriedigt jedoch nicht bei angetriebenen Vorderrädern aufgrund eines relativ großen Störkrafthebelarmes, insbesondere dann, wenn die Feder aus Gründen der Bauhöhe neben dem Reifen liegen muß und der Reifen sehr breit ist.

Aus der DE-A-29 45 802 ist eine weitere Vorderradaufhängung für Kraftfahrzeuge bekannt, bei der ein verdrehfest an der Karosserie abgestütztes Teleskopfederbein, an seinem unteren Ende fest mit einer oberen und unteren Strebe verbunden ist, die jeweils an entsprechenden Verlängerungen des Radträgers angelenkt sind. Unterhalb des Federbeines ist ein Querlenker angeordnet, der zum einen über ein Drehgelenk mit dem Radträger und auf der gegenüberliegenden Seite über zwei Gelenke mit der Karosserie verbunden ist. Durch die beiden gelenkig angeordneten Streben wird eine Zusatzdrehachse gebildet, die einen kleinen Störkrafthebelarm ermöglicht. Der Nachteil dieser Aufhängung mit Zusatzdrehachse liegt jedoch in der Verringerung des in der Radschüssel zur Verfügung stehenden Raumes, so daß nur relativ kleine Bremsscheiben eingebaut werden können.

Aufgabe der Erfindung ist es, eine Aufhängung mit kleinen Störkrafthebelarm und einem ausreichenden Platz in der Radschüssel für Bremsscheiben und weitere Bauteile selbst bei kleinen Felgengrößen zu schaffen.

Diese Aufgabe wird erfindungsgemäß bei einer Aufhängung der oben genannten Art durch die Merkmale des kennzeichnenden Teils des Anspruchs 1 gelöst.

Bei der erfindungsgemäßen Aufhängung können in einfacher Weise Zusatzeinrichtungen, wie beispielsweise ABS-Sensoren und Antriebswellen angeordnet werden. Ferner ermöglicht die erfindungsgemäße Aufhängung bei gleichen Karosserieabmessungen eine einfache Umrüstung des drehfest angeordneten Federbeins auf ein übliches drehbares Federbein, so daß sich der Änderungsaufwand in der Serienproduktion durch die Verwendung gleicher Bauteile erheblich verringert. Ferner kann die Aufhängung auch bei einer niedrigen Haubenlinie des Fahrzeuges eingesetzt werden.

Die erfindungsgemäße Aufhängung wird nachstehend anhand von Zeichnungen beispielsweise erläutert. Dabei zeigen:
Fig. 1 eine perspektivische Ansicht einer ersten Ausführungsform der Radaufhängung,
Fig. 2a eine Ansicht der in Fig. 1 gezeigten Ausführungsform in Fahrzeuglängsrichtung,
Fig. 2b die Geometrie der in den Fig. 1 und 2a gezeigten beiden Lenker in einer Ansicht Ansicht von unten,
Fig. 3 eine zweite Ausführungsform der Aufhängung in einer Ansicht in Fahrzeuglängsrichtung und eine perspektivische Ansicht
Fig. 4 eine dritte Ausführungsform der Aufhängung.

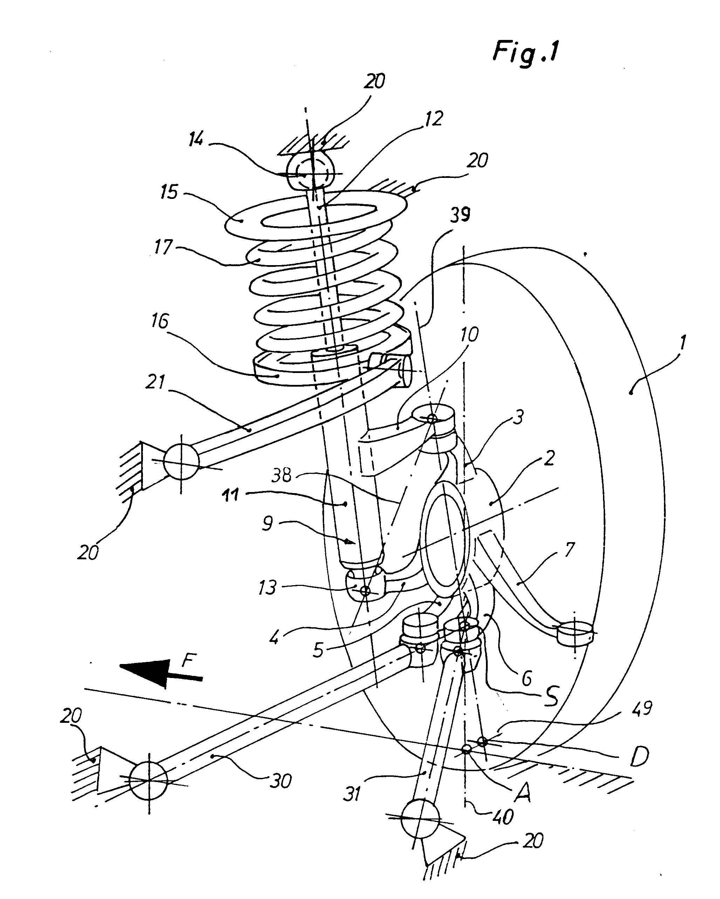

In der Fig. 1 ist ein gelenktes Rad 1 eines Personenkraftwagens gezeigt, das an einem Radträger 2 gelagert ist. Zur Führung des Rades 1 bei der Federungs- und Lenkbewegung ist der Radträger 2 über zwei in seinem unteren Bereich angelenkte Lenker 30 und 31 mit dem Fahrzeugaufbau 20 verbunden. Die Anlenkung der beiden Lenker 30 und 31 erfolgt über zwei am Radträger 2 ausgebildete Gelenkarme 5 und 6, die entsprechend dem gewünschten Schnittpunkt S der beiden Längsachsen der Lenker 30 und 31 voneinander beabstandet sind. Oberhalb der Gelenkarme 5 und 6 befindet sich ein weiterer Gelenkarm 4, der außermittig angeordnet ist, und der mit einem Federbein 9 über ein an diesem angeordneten Gelenk 13 verbunden ist. Im oberen Bereich des Tragrohres 11 des Federbeines 9 ist ein weiterer Gelenkarm 10 befestigt, der gelenkig mit einem am oberen Ende des Radträgers 2 ausgebildeten Gelenkarm 3 verbunden ist. Etwa in gleicher Höhe wie der Gelenkarm 10 befindet sich ein unterer Federteller 16, in dem eine Schraubenfeder 17 mit ihrem unteren Ende aufliegt. Das obere Ende der Schraubenfeder 17 befindet sich in einem oberen Federteller 15. Durch die Schraubenfeder 17 und die Federteller 15, 16 ragt eine Kolbenstange 12 hindurch, die über eine entsprechende Abstützung 14 am Aufbau 20 befestigt ist. In dieser Ausführungsform wird das Federbein 9 nicht wie beim Stand der Technik über die Querlenker, sondern über einen Zusatzlenker 21 direkt am Aufbau 20 oder einem Fahrschemel bzw. einem Hilfsrahmen gegen Verdrehung abgestützt. Der Zusatzlenker ist an seinem äußeren Ende am oberen Bereich des Tragrohres 11 des Federbeines 9 gehaltert und an seinem inneren Ende mit dem Aufbau 20 verbunden. Das äußere Ende des Zusatzlenkers 21 kann auch am unteren Federteller 16 zum Abstützen des auf das Tragrohr 11 wirkenden Drehmomentes angeordnet sein, wodurch der wirksame Hebelarm gegenüber der Anordnung am Tragrohr 11 vergrößert ist. Die Lage des Zusatzlenkers 21 ist nicht festgelegt, so daß der Zusatzlenker sowohl in Querrichtung als auch in Längsrichtung angeordnet sein kann, wobei gegebenenfalls ein Stabilisator erforderlich ist. Wie aus der Fig. 1 ferner hervorgeht, ist es durch eine entsprechende Wahl der Geometrie der Gelenkarme 3 und 4 möglich, daß der im Bereich der Radmitte liegende Bereich des Radträgers 2, beispielsweise für eine Antriebswelle 35, frei bleibt. Ferner kann durch entsprechende Wahl der Geometrie der Gelenkarme 3 und 4 der Nachlauf und der Spreizungswinkel bestimmt werden.

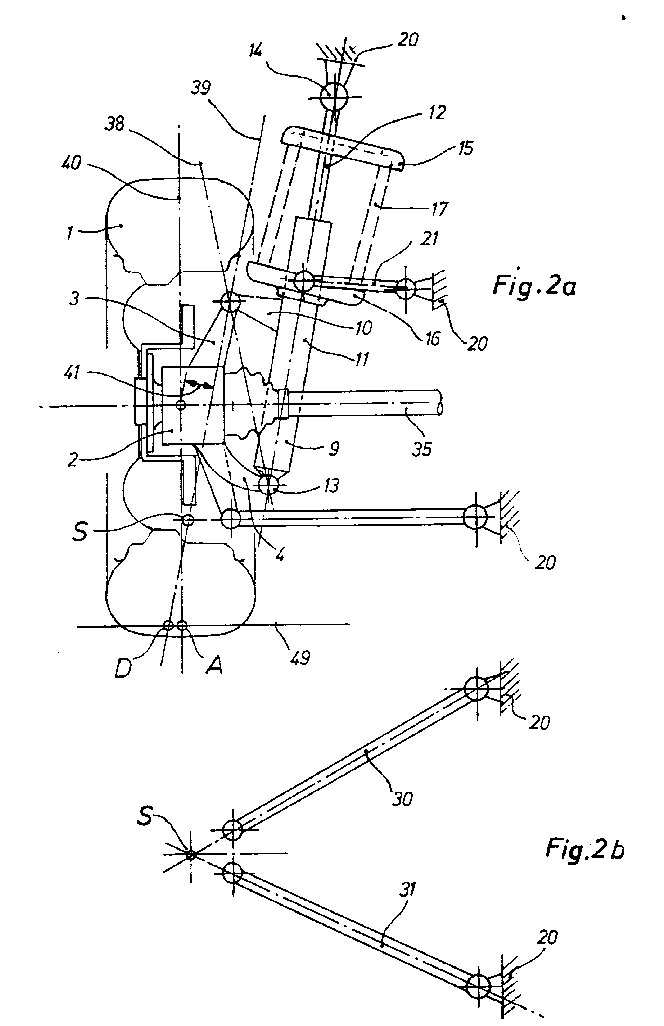

In der Fig. 2a ist die zwischen den beiden Gelenkarmen 3 und 4 liegende Zusatzdrehachse 38, sowie die ideelle Lenkachse 39 eingezeichnet, die zwischen dem oberen Gelenk des Gelenkarmes 3 und dem Schnittpunkt S der Längsachsen der beiden Lenker 30 und 31 verläuft. Wie aus der Fig. 2a hervorgeht, ist der den Störkrafthebelarm bestimmende Abstand 41 zwischen der Radmitte 40 und der Lenkachse 39 gering. Ferner weist diese Aufhängung einen kleinen negativen Lenkrollradius auf, wie sich dies aus dem Abstand des außerhalb der Radmittenebene 40 liegenden und auf der Fahrbahn 49 befindlichen Durchstoßpunktes D der verlängerten Lenkungsdrehachse 39 zum Radaufstandspunkt A ergibt.

In der Fig. 2b ist die dreieckförmige Anordnung der beiden Lenker 30 und 31 sowie der Schnittpunkt S der gedachten Verlängerung der Längsachsen der Lenker 30 und 31 gezeigt.

Neben der in der Fig. 2a dargestellten waagrechten Anordnung der Lenker 30 und 31 ist auch eine schräge und versetzt gegeneinanderliegende Anordnung möglich.

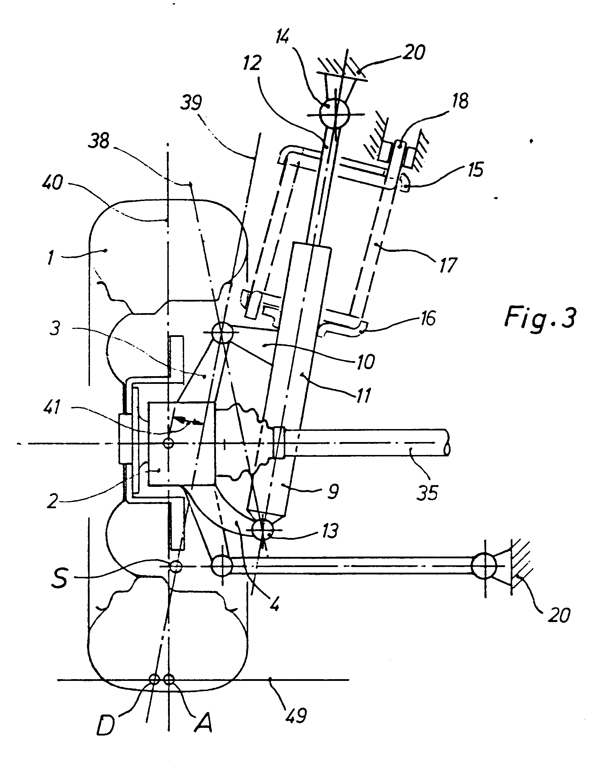

In der in der Fig. 3 gezeigten zweiten Ausführungsform erfolgt die Abstützung des Federbeines 9 gegen Verdrehung am Aufbau 20 über die Schraubenfeder 17. Zu diesem Zweck sind die Schraubenfederenden 18 und 19 jeweils abgebogen und in entsprechende, in den Federtellern 15 und 16 ausgebildeten Bohrungen eingesetzt. Das obere Schraubenfederende 18 ist oberhalb des Federtellers 15 in einer am Aufbau 20 angeordneten Befestigungsvorrichtung gehaltert.

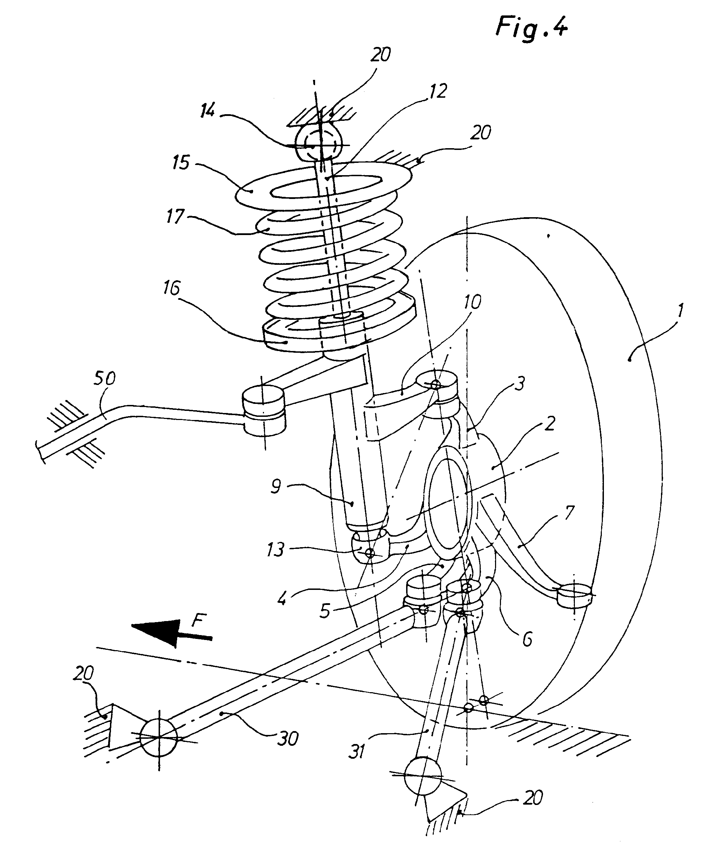

Bei einer dritten, in der Fig. 4 gezeigten Ausführungsform erfolgt die Abstützung des Federbeines 9 gegen Verdrehung am Aufbau über einen Stabilisator 50.

## Patentansprüche

1. Aufhängung eines lenkbaren Fahrzeugrades, insbesondere eines Vorderrades eines Personenkraftwagens, bei dem ein das Rad (1) lagernder Radträger (2) über jeweils eine Gelenkverbindung mit einem Lenker und einem Federbein (9) und dadurch mit einem Fahrzeugaufbau (20) oder dergleichen verbunden ist, wobei das Federbein (9) am Fahrzeugaufbau (20) oder dergleichen gegen Verdrehung abgestützt ist und das Federbein (9) über eine obere gelenkige Abstützung (14) mit dem Fahrzeugaufbau (20) oder dergleichen verbunden ist, dadurch gekennzeichnet, daß der Radträger (2) über zwei Gelenkverbindungen (3, 10; 4, 13) drehbar an dem Federbein (9) angeordnet ist, wobei ein unterer, am Radträger (2) ausgebildeter Gelenkarm (4) mit einem am Federbeinende angeordneten Gelenk (13) und ein oberer, am Radträger (2) ausgebildeter Gelenkarm (3) mit einem im oberen Bereich eines Tragrohres (11) des Federbeines (9) angeordneten Gelenkarm (10) gelenkig verbunden ist und daß zwei Lenker (30, 31) im unteren Bereich des Radträgers (2) über zwei am Radträger (2) aus gebildete Gelenkarme (5, 6) angelenkt sind, die entsprechend dem gewünschten Schnittpunkt(S) der beiden Längsachsen der Lenker (30, 31) voneinander beabstandet sind.

2. Aufhängung nach Anspruch 1, dadurch gekennzeichnet, daß die Abstützung des Federbeines gegen Verdrehen am Aufbau (20) über einen Zusatzlenker (21) erfolgt, der an seinem einen Ende am Tragrohr (11) und an seinem anderen Ende am Aufbau (20) gehaltert ist.

3. Aufhängung nach Anspruch 1, dadurch gekennzeichnet, daß die Abstützung des Federbeines (9) gegen Verdrehen am Aufbau über den Zusatzlenker (21) erfolgt, der an seinem einen Ende an einem Federteller (16, 15) und an seinem anderen Ende am Aufbau (20) gehaltert ist.

4. Aufhängung nach Anspruch 1, dadurch gekennzeichnet, daß die Abstützung des Federbeins (9) gegen Verdrehung am Aufbau über eine am oberen Ende des Federbeins (9) angeordnete Schraubenfeder (17) erfolgt.

5. Aufhängung nach Anspruch 4, dadurch gekennzeichnet, daß das obere und das untere Schraubenfederende (18, 19) jeweils so abgebogen ist, daß die Federenden (18, 19) in entsprechende, in den Federtellern (15, 16) ausgebildete Öffnungen eingreifen und daß sich das obere, abgebogene Schraubenfederende (18) bis in eine im Fahrzeugaufbau (20) ausgebildete Befestigungsvorrichtung erstreckt, in der das Federende (18) gehaltert ist.

6. Aufhängung nach Anspruch 1, dadurch gekennzeichnet, daß die Verdrehsicherung des Federbeines (9) am Aufbau (20) über einen Stabilisator (50) erfolgt.

## Claims

1. A suspension for a steerable wheel of a vehicle, more especially the front wheel of a passenger car, in which a wheel support (2) bearing the wheel (1) is connected via respective knuckle joints to a guide rod and a spring leg (9) and is thus connected to a car body (20) or the like, the spring leg (9) being non-rotatably mounted on the car body (20) or the like and the spring leg (9) being connected to the car body (20) or the like via a pivotable top brace (14), characterised in that the wheel support (2) is pivotably mounted on the spring leg (9) via two knuckle Joints (3, 10; 4, 13), a lower articulated arm (4) formed on the wheel support (2) being pivotably connected to a joint (13) on the end of the spring leg and an upper articulated arm (3) formed on the wheel support (2) being pivotably connected to an articulated arm (10) disposed in the upper region of a tube (11) for bracing the spring leg, and two guide rods (30, 31) are pivotably mounted in the lower region of the wheel support (2) via two articulated arms (5, 6) formed on the wheel support (2), the articulated arms (5, 6) being separated by a distance corresponding to the desired point of intersection (S) between the two longitudinal axes of the guide rods (30, 31).

2. A suspension according to claim 1, characterised in that the spring leg is non-rotatably braced on the body (20) by means of an additional guide rod (21) secured at one end to the bracing tube (11) and at the other end to the body (20).

3. A suspension according to claim 1, characterised in that the spring leg (9) is non-rotatably braced on the body via the additional guide rod (21), which is held by a spring washer (16, 15) at one end and by the body (20) at the other end.

4. A suspension according to claim 1, characterised in that the spring leg (9) is non-rotatably braced on the body by means of a helical spring (17) disposed at the top end of the spring leg (9).

5. A suspension according to claim 4, characterised in that the top end (18) and the bottom end (19) of the helical spring are bent so that the ends (18, 19) engage in corresponding openings formed in the spring washers (15, 16) and the top bent end (18) extends and is held in a securing device formed in the body (20).

6. A suspension according to claim 1, characterised in that the spring leg (9) is non-rotatably secured to the body (20) by a stabiliser (50).

## Revendications

1. Suspension d'une roue directrice de véhicule, en particulier d'une roue avant d'une voiture particulière dans laquelle un support de roue (2) recevant la roue (1) est relié respectivement par une liaison articulée à un bras et à une jambe de force à ressort (9) et par suite à la carrosserie du véhicule (20) ou équivalent, la jambe de force (9) étant étayée à la carrosserie du véhicule (20) ou équivalent contre la torsion et la jambe de force (9) étant reliée par un appui (14) à la carrosserie du véhicule (20) ou équivalent, caractérisée en ce que le support de roue (2) est disposé mobile en rotation sur la jambe de force (9) par l'intermédiaire de deux liaisons articulées (3, 10 ; 4, 13), un bras articulé (4) inférieur étant formé sur le support de roue (2) et relié par articulation à une articulation (13) placée à l'extrémité de la jambe de force à ressort (9) et un bras articulé (3) supérieur étant formé sur le support de roue (2) et relié par articulation à un bras articulé (10) fixé dans la zone supérieure d'un tube support (11) de la jambe de force (9) et en ce que deux bras (30, 31) situés dans la zone inférieure du support de roue (2) sont articulés sur deux bras articulés (5, 6) formés sur le support de roue (2), qui sont distants l'un de l'autre conformément au point d'intersection désiré (S) des deux axes longitudinaux des bras (30, 31).

2. Suspension selon la revendication 1, caractérisée en ce que le support de la jambe de force à ressort contre la torsion sur la carrosserie (20) est réalisé par un bras additionnel (21) qui est fixé à une de ses extrémités sur le tube support (11) et à son autre extrémité sur la carrosserie (20).

3. Suspension selon la revendication 1, caractérisée en ce que l'appui de la jambe de force à ressort (9) contre la torsion sur la carrosserie est réalisé par le bras supplémentaire (21), qui est fixé à une de ses extrémités sur une coupelle de ressort (16, 15) et à son autre extrémité à la carrosserie (20).

4. Suspension selon la revendication 1, caractérisée en ce que l'appui de la jambe de force à ressort (9) contre la torsion sur la carrosserie est réalisé par un ressort hélicoïdal (17) placé à l'extrémité supérieure de la jambe de force (9).

5. Suspension selon la revendication 4, caractérisée en ce que l'extrémité supérieure et l'extrémité inférieure du ressort hélicoïdal (18, 19) sont repliées respectivement de façon que les extrémités du ressort (18, 19) s'insèrent dans les ouvertures correspondantes formées dans les coupelles de ressort (15, 16) et en ce que l'extrémité supérieure du ressort hélicoïdal (18) repliée s'étende jusqu'à un dispositif de fixation réalisé dans la carrosserie du véhicule (20), dans laquelle se trouve maintenue l'extrémité du ressort (18).

6. Suspension selon la revendication 1, caractérisée en ce que la sécurité contre la torsion de la jambe de force à ressort (9) est réalisée sur la carrosserie (20) par un stabilisateur (50).
